# EUROPEAN PATENT APPLICATION

(11) **EP 4 556 838 A1**
(43) Date of publication of application: **21.05.2025**
(21) Application number: 23210123.8
(22) Date of filing: 15.11.2023
(51) Int. Cl.: F28D 1/053, B33Y 80/00, F28D 21/00

(54) **A SEAL FOR A CONDENSER**

(71) Applicant: VALEO SYSTEMES THERMIQUES, 78320 Le Mesnil Saint-Denis (FR)
(72) Inventor: ROMANET, Lydia, 78322 Le Mesnil-Saint-Denis Cedex (FR); FERNANDES, Patrick, 78322 Le Mesnil-Saint-Denis Cedex (FR); FERNANDES PEREIRA DA VENDA, Fernando, 78322 Le Mesnil-Saint-Denis Cedex (FR); SOUKEUR, Zoulikha, 78322 Le Mesnil-Saint-Denis Cedex (FR); PEREIRA, Daniel, 78322 Le Mesnil-Saint-Denis Cedex (FR); LETERME, Fabien, 78322 Le Mesnil-Saint-Denis Cedex (FR)
(74) Representative: Valeo Systèmes Thermiques

(57) **Abstract**

A seal for a condenser comprises a plurality of fastening members that are adapted to connect to the condenser. The seal further comprises a connecting member that is adapted to connect to the plurality of the fastening members. The seal further comprises a sealing member that extends from the connecting member and is adapted to block air from passing through the sealing member. The seal further is made of at least two materials, wherein the at least two materials have different hardness.

## Description

### TECHNICAL FIELD

The present invention relates to a seal for a heat exchanger. In particular, the present invention relates to seal for a condenser for a motor vehicle.

### BACKGROUND

Generally, a condenser comprises a plurality of tubes fluidically connected between two manifolds. Further, the condenser comprises an end tube from the plurality of tubes at each end acting as a blind tube. Since the condenser comprises the end tube unlike a radiator comprising a side plate, it is not possible to use a seal configured to connect to the side plate of the radiator for the condenser to block air bypassing the condenser. To overcome this, a foam seal is used for the condenser as the foam seal can be glued to the end tube of the condenser. However, the foam seal connected to the condenser deteriorates over time, leading to air bypassing the condenser. Therefore, it would be desired to provide a seal for the condenser that can be adapted to connect to the end tube of the condenser. Also, it would be desired to provide the seal for the condenser that can be durable and function reliably over time.

### SUMMARY

An objective of the present invention is to provide a seal for a condenser that alleviates the problems in the prior arts. To be more precise, an objective of the present invention is to provide the seal for the condenser that can be connected to an end tube of the condenser.

Another objective of the present invention is to provide the seal for the condenser that can be durable and function reliably over time.

To achieve the above objectives, the present invention herein provides a seal for a condenser comprising: a plurality of fastening members; a connecting member adapted to connect to the plurality of fastening members; and a sealing member extending from the connecting member, is adapted to block air from passing through the sealing member, wherein the seal is of at least two materials.

In one aspect, the plurality of fastening members, the connecting member and the sealing member are integrally formed as a single component.

In another aspect, the plurality of fastening members and the connecting member are of a first material.

In another aspect, the sealing member is of a second material.

In another aspect, the second material is softer than the first material.

In another aspect, the connection member and the sealing member are formed as a single component separate from the plurality of fastening members.

In another aspect, the plurality of fastening members are of a first material, the sealing member is of a second material and the connection member is of a third material.

In another aspect, the second material is softer than the first material and the third material.

In another aspect, the third material is softer than the first material.

In another aspect, the plurality of fastening members are adapted to be connected to at least one tube of the condenser.

In another aspect, the plurality of fastening members is at least one of clip and hook.

In another aspect, the plurality of fastening members are adapted to be connected to a manifold of the condenser.

In another aspect, the plurality of fastening members is clip.

In another embodiment, the present invention herein provides a condenser assembly comprising: a condenser adapted to be assembled with another component; and at least one seal according to any one of above embodiments, is adapted to be connected to the condenser, wherein the plurality of fastening members of the at least one seal is adapted to connect the seal to the condenser; and the sealing member of the at least one seal is adapted to at least partially block air from flowing between the condenser and the other component.

In another aspect, the other component is at least one of heat exchanger, fan system, frame and air duct.

According to the above embodiments, the plurality of fastening members of the seal is adapted to connect to the plurality of tubes of the condenser. Therefore, the seal can be connected to the end tube of the condenser. Also, the seal can be durable and function reliably over time.

### BRIEF DESCRIPTION OF DRAWINGS

Other characteristics, details and advantages of the invention can be inferred from the description of the invention hereunder. A more complete appreciation of the invention and many of the attendant advantages thereof will be readily obtained, as the same becomes better understood by reference to the following description when considered in connection with the accompanying figures, wherein:
FIG. 1 illustrates a seal for a condenser, in accordance with an embodiment of the present invention;
FIG. 2 illustrates an assembly of the seal of FIG. 1 and the condenser;
FIG. 3 illustrates a sectional view of the assembly of the seal and the condenser of FIG. 2, at plane A-A';
FIG. 4 illustrates the seal for the condenser, in accordance with another embodiment of the present invention;
FIG. 5 illustrates an assembly of the seal of FIG. 4 and the condenser;
FIG. 6 illustrates the seal for the condenser, in accordance with another embodiment of the present invention;
FIG. 7 illustrates an assembly of the seal of FIG. 6 and the condenser;
FIG. 8 illustrates a sectional view of the assembly of the seal and the condenser of FIG. 7, at plane B-B';
FIG. 9 illustrates the seal for the condenser, in accordance with another embodiment of the present invention; and
FIG. 10 illustrates an assembly of the seal of FIG. 9 and the condenser.

### DETAILED DESCRIPTION OF PREFERRED EMBODIMENTS

It must be noted that the figures disclose the invention in a detailed enough way to be implemented, the figures helping to better define the invention, if need be. The invention should however not be limited to the embodiments disclosed in the description.

In the present description, some elements or parameters may be indexed, such as a first element and a second element. In this case, unless stated otherwise, this indexation is only meant to differentiate and name elements that are similar but not identical. No idea of priority should be inferred from such indexation, as these may be switched without betraying the invention. Additionally, this indexation does not imply any order in mounting or use of the elements of the invention.

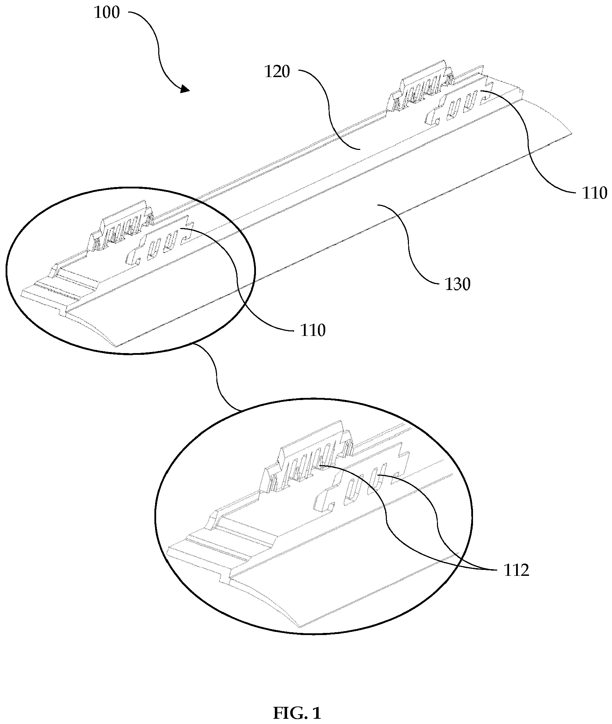

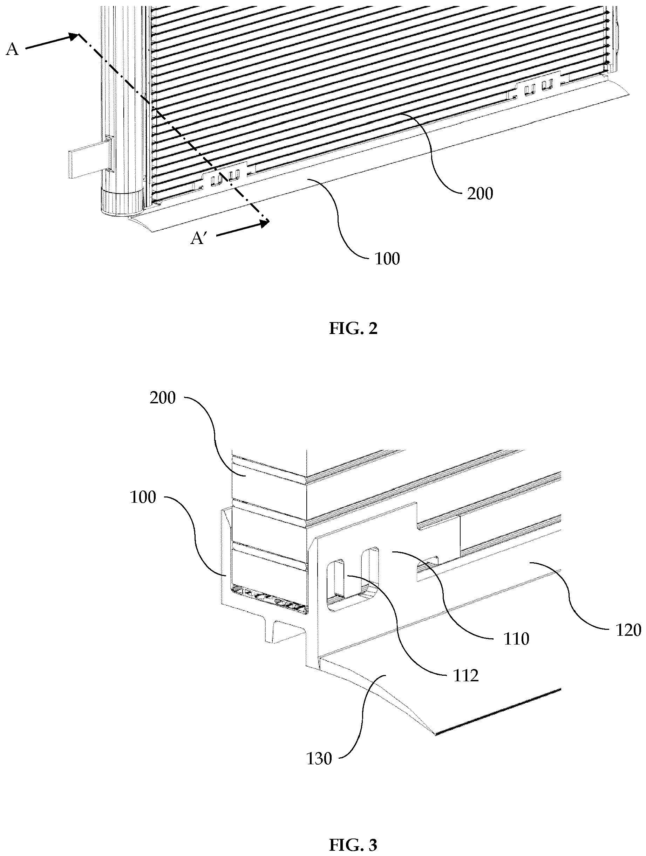

FIG. 1 illustrates a seal 100 for a condenser 200, in accordance with an embodiment of the present invention. FIG. 2 illustrates an assembly of the seal 100 of FIG. 1 and the condenser 200. FIG. 3 illustrates a sectional view of the assembly of the seal 100 and the condenser 200 of FIG. 2, at plane A-A'. The seal 100 for the condenser 200 comprises a plurality of fastening members 110, a connecting member 120 and a sealing member 130. In one embodiment, the seal 100 can comprise the plurality of fastening members 110 that are adapted to connect to the condenser 200. The seal 100 can comprise the connecting member 120 that is adapted to connect to the plurality of the fastening members 110. The seal 100 can comprise a sealing member 130 that extends from the connecting member 120 and is adapted to block air from passing through the sealing member 130. The seal 100 can be made of at least two materials, wherein the at least two materials have different hardness.

In one aspect, the plurality of fastening members 110, the connecting member 120 and the sealing member 130 can be made as a single part. In another aspect, the plurality of fastening members 110, the connecting member 120 and the sealing member 130 can be made of two materials, wherein the two materials have different hardness. In one example, the plurality of fastening members 110 and the connecting member 120 can be made of a first material. The sealing member 130 can be made of a second material. The second material can be softer than the first material. This allows better fitment of the sealing member 130 as the second material is more flexible and allows, for example, compensating tolerances, better sealing properties on uneven surfaces, and increased durability of the sealing member 130 itself. In another aspect, the first material and the second material can be polymer materials.

In another aspect, the plurality of fastening members 110 can be clips. In another aspect, the plurality of fastening members 110 can be adapted to connect to a plurality of tubes of the condenser 200. In another example, the plurality of fastening members 110 can be adapted to connect to an end tube of the condenser 200 and at least one tube adjacent to the end tube of the condenser 200. In another aspect, the plurality of fastening members 110 can comprise a plurality of resilient members 112 adapted to abut against the end tube of the condenser 200 and the at least one tube adjacent to the end tube of the condenser 200. In another example, the plurality of resilient members 112 can be adapted to abut against shorter sides of the end tube of the condenser 200 and the at least one tube adjacent to the end tube of the condenser 200.

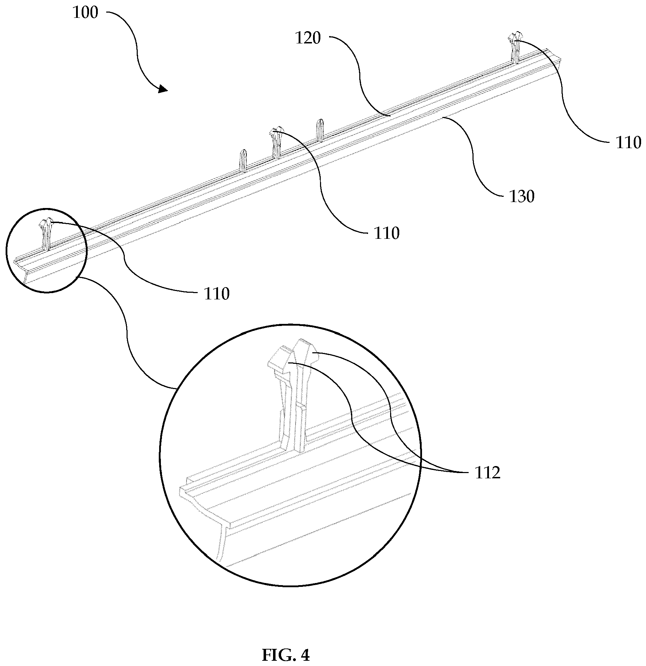

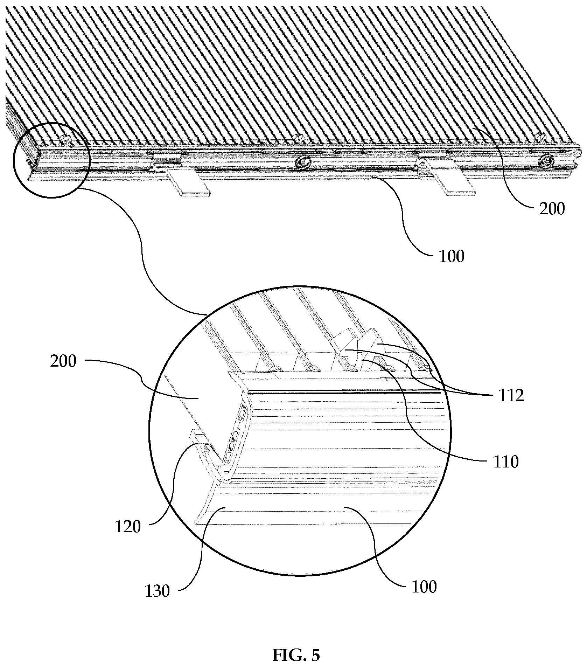

FIG. 4 illustrates the seal 100 for the condenser 200, in accordance with another embodiment of the present invention. FIG. 5 illustrates an assembly of the seal 100 of FIG. 4 and the condenser 200. In another aspect, the plurality of fastening members 110 can be a plurality of hooks. In another aspect, the plurality of fastening members 110 can be adapted to connect to the plurality of tubes of the condenser 200. In another example, the plurality of fastening members 110 can be adapted to connect to at least two tubes of the condenser 200. In another aspect, the plurality of fastening members 110 can comprise the plurality of resilient members 112 adapted to abut against the at least two tubes of the condenser 200. In another example, the plurality of resilient members 112 can be adapted to abut against longer sides of the at least two tubes of the condenser 200.

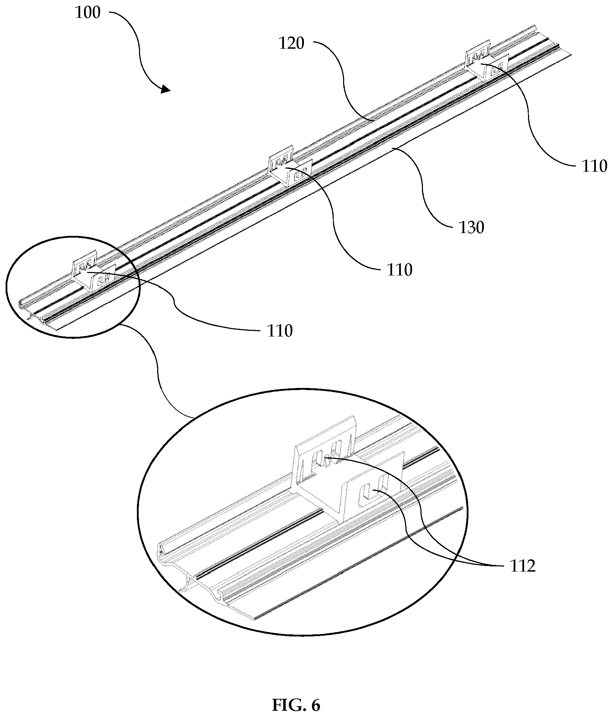

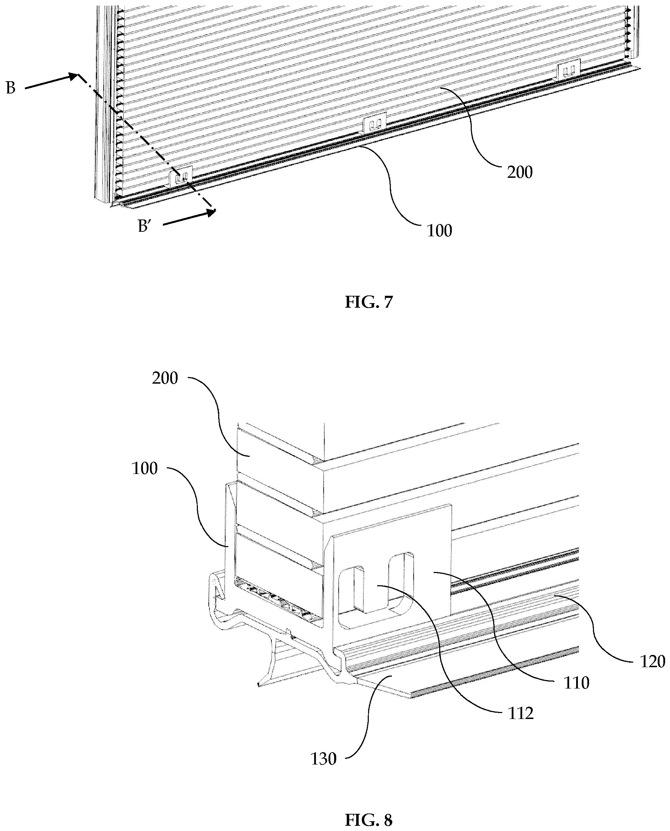

FIG. 6 illustrates the seal 100 for the condenser 200, in accordance with another embodiment of the present invention. FIG. 7 illustrates an assembly of the seal 100 of FIG. 6 and the condenser 200. FIG. 8 illustrates a sectional view of the assembly of the seal 100 and the condenser 200 of FIG. 7, at plane B-B'. In another aspect, the plurality of fastening members 110, the connecting member 120 and the sealing member 130 can be made as separate parts. In another example, the connecting member 120 and the sealing member 130 can be made as a single part that is separate from the plurality of fastening members 110. In another aspect, the plurality of fastening members 110, the connecting member 120 and the sealing member 130 can be made of three materials, wherein the three materials have different hardness. In another example, the plurality of fastening members 110 can be made of a first material. The sealing member 130 can be made of a second material. The connection member 120 can be made of a third material. The second material can be softer than the first material and the third material. The third material can be softer than the first material. In another aspect, the first material, the second material and the third material can be polymer materials. In another aspect, the connection member 120 can be adapted to connect to the plurality of fastening members 110 before the seal 100 is connected to the condenser 200.

In another aspect, the plurality of fastening members 110 can be clips. In another aspect, the plurality of fastening members 110 can be adapted to connect to the plurality of tubes of the condenser 200. In another example, the plurality of fastening members 110 can be adapted to connect to an end tube of the condenser 200 and at least one tube adjacent to the end tube of the condenser 200. In another aspect, the plurality of fastening members 110 can comprise the plurality of resilient members 112 adapted to abut against the end tube of the condenser 200 and the at least one tube adjacent to the end tube of the condenser 200. In another example, the plurality of resilient members 112 can be adapted to abut against shorter sides of the end tube of the condenser 200 and the at least one tube adjacent to the end tube of the condenser 200.

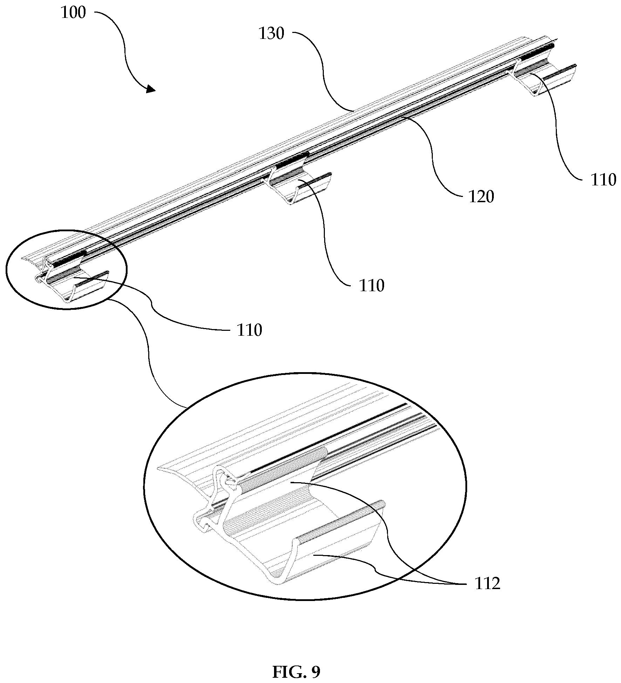

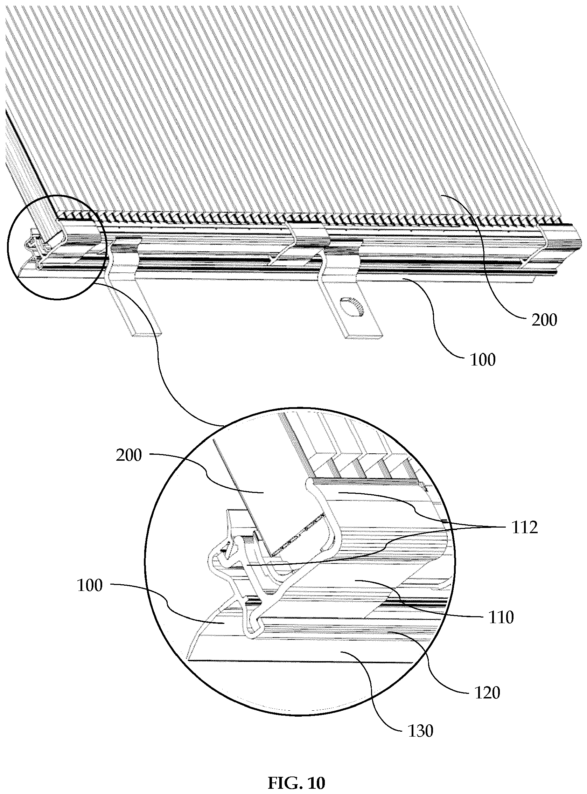

FIG. 9 illustrates the seal 100 for the condenser 200, in accordance with another embodiment of the present invention. FIG. 10 illustrates an assembly of the seal 100 of FIG. 9 and the condenser 200. In another aspect, the plurality of fastening members 110 can be clips. In another aspect, the plurality of fastening members 110 can be adapted to connect to a manifold of the condenser 200. In another aspect, the plurality of fastening members 110 can comprise the plurality of resilient members 112 adapted to abut against the manifold of the condenser 200. In another example, the plurality of resilient members 112 can be adapted to abut against at least two sides of the manifold of the condenser 200.

In another embodiment, a condenser assembly can comprise the condenser 200 assembled with another component and at least one seal 100 connected to the condenser 200. In another aspect, the condenser 200 can be adapted to be assembled with another component, wherein the other component can be at least one of heat exchanger, fan system, frame and air duct. In another aspect, the sealing member 130 of the at least one seal 100 can be adapted to at least partially block air from flowing between the condenser 200 and the other component. Therefore, the at least one seal 100 can be adapted to at least partially block air from bypassing the condenser 200. In another example, four seals 100 can be connected to four sides of the condenser 200, wherein the four seals 100 can at least partially block air from bypassing the condenser 200 along the four sides of the condenser 200.

According to the above-described embodiments, the plurality of fastening members 110 of the seal 100 can be adapted to connect to the plurality of tubes of the condenser 200. Further, the seal 100 can be made of polymer materials that are durable. Therefore, the seal 100 can be connected to the end tube of the condenser 200. Also, the seal 100 can be durable and function reliably over time.

All the above-described embodiments are just to explain the present invention while more embodiments and combinations thereof might exist. Hence, the present invention should not be limited to the above-described embodiments alone.

## Claims

1. A seal (100) for a condenser (200) comprising:
a plurality of fastening members (110);
a connecting member (120) adapted to connect to the plurality of fastening members (110); and
a sealing member (130) extending from the connecting member (120), is adapted to block air from passing through the sealing member (130), wherein the seal (100) is of at least two materials.

2. The seal (100) as claimed in preceding claim, wherein the plurality of fastening members (110), the connecting member (120) and the sealing member (130) are integrally formed as a single component.

3. The seal (100) as claimed in preceding claim, wherein the plurality of fastening members (110) and the connecting member (120) are of a first material.

4. The seal (100) as claimed in preceding claim, wherein the sealing member (130) is of a second material.

5. The seal (100) as claimed in preceding claim, wherein the second material is softer than the first material.

6. The seal (100) as claimed in claim 1, wherein the connection member (120) and the sealing member (130) are formed as a single component separate from the plurality of fastening members (110).

7. The seal (100) as claimed in preceding claim, wherein the plurality of fastening members (110) are of a first material, the sealing member (130) is of a second material and the connection member (120) is of a third material.

8. The seal (100) as claimed in preceding claim, wherein the second material is softer than the first material and the third material.

9. The seal (100) as claimed in claim 7, wherein the third material is softer than the first material.

10. The seal (100) as claimed in any one of preceding claims, wherein the plurality of fastening members (110) are adapted to be connected to at least one tube of the condenser.

11. The seal (100) as claimed in preceding claim, wherein the plurality of fastening members (110) is at least one of clip and hook.

12. The seal (100) as claimed in any one of claims 1 to 9, wherein the plurality of fastening members (110) are adapted to be connected to a manifold of the condenser.

13. The seal (100) as claimed in preceding claim, wherein the plurality of fastening members (110) is clip.

14. A condenser assembly comprising:
a condenser (200) adapted to be assembled with another component; and
at least one seal (100) as claimed in any one of preceding claims, is adapted to be connected to the condenser (200), wherein
the plurality of fastening members (110) of the at least one seal (100) is adapted to connect the seal (100) to the condenser (200); and
the sealing member (130) of the at least one seal (100) is adapted to at least partially block air from flowing between the condenser (200) and the other component.

15. The condenser assembly as claimed in preceding claim, wherein the other component is at least one of heat exchanger, fan system, frame and air duct.
